# EUROPEAN PATENT SPECIFICATION

(11) **EP 3 958 662 B1**
(45) Date of publication and mention of the grant of the patent: **03.05.2023**
(21) Application number: 20730126.8
(22) Date of filing: 23.04.2020
(51) Int. Cl.: A01B 49/06, A01B 25/00

(54) **PLANT CULTIVATION METHOD**
PFLANZENZUCHTVERFAHREN
PROCÉDÉ DE CULTURE DE PLANTES

(30) Priority: 24.04.2019 PL 42970819
(43) Date of publication of application: 02.03.2022
(73) Proprietor: Mzuri World Spolka z ograniczona odpowiedzialnoscia, 89-110 Sadki (PL)
(72) Inventor: JASKULSKI, Dariusz, 86-061 Brzoza (PL); JASKULSKA, Iwona, 86-061 Brzoza (PL); ROZNIAK, Marek, 89-110 Sadki (PL); KASZKOWIAK, Jerzy, 86-005 Zielonka (PL)
(74) Representative: Patpol Kancelaria Patentowa Sp. z o.o.
(86) International application number: PCT/PL2020/050031
(87) International publication number: WO 2020/218931

(56) References cited:
- DE-A1-102012 010 243
- EA-B1- 005 351
- FR-A1- 2 662 572
- PL-B1- 231 360
- US-A1- 2005 263 049

## Description

The subject of the invention is a plant cultivation method, wherein cultivated strips of soil, where crop seeds are to be sown, are scarified down to 35 cm, wherein non-cultivated strips are left between these strips, wherein along one passage of a machine equipped with a disc coulter, scarifying teeth, fertilizer dosing device, pressing wheels, seeds sowing coulters, and depth and compacting wheels, mulch is removed and left on non-cultivated strips, the soil is scarified within cultivated strips, and after soil scarification, mineral fertilizers are placed within the scarified strips. Then the cultivated strips are compacted using the pressing wheel of the machine, and after compaction, crop seeds are sown therein, and then the soil is compacted using the depth and compacting wheel of the machine, maintaining the depth of the sowing and water infiltration.

Solutions according to the prior art disclose a plant cultivation method known as "strip-till". The idea of the strip-till method concerns deep, down to 30 - 35 cm, scarification of soil strips where the seeds are to be sown, and leaving non-scarified soil inbetween. Within the period from harvesting the forecrop to sowing another plant, no cultivation is performed. If this period is long, the soil dries fast and its surface should be covered with mulch, e.g. fragmented straw. Mulch plays a very important role within the strip-till technology, as in other ploughless cultivation methods. The plant mass on the soil surface plays a similar role to a thin layer of scarified soil after harvesting using classic cultivation with ploughs. It protects, e.g. lower layers against extensive heating, water evaporation and drying. In the field, after cultivation and sowing using the strip-till technology, there are two soil spaces with differing properties. The first one is the strip of scarified soil. It is of much less density and compaction and contains more air. This strip is used to place mineral fertilizers and seeds in it. This soil heats up easily, because it is not dried by previous other cultivations and provides advantageous conditions for sprouting as well as fast and even plant germination. Soil within the interrows remains unscarified; it maintains water infiltration from deeper layers. Plant residues on the surface limit its evaporation, and provide for even snow distribution on the field, even on rough land. This is beneficial for plant wintering. The strip-till technology may consist of two independent agrotechnological tasks spaced in time. First, soil strips are cultivated, then the prepared soil is sown with seeds, depending on the type of plants being sown - using, or not, satellite navigation. Modern designs of units, e.g. Mzuri, allow for cultivating soil strips, applying mineral fertilizers and sowing the seeds at the same time. Mineral fertilizers are placed within a deeply scarified, dozen-centimetre-wide, soil strip. The pressing wheel of the unit compacts the soil and the sowing section places seeds in it. Wheels maintaining the depth of sowing and pressing the soil in order to increase the water infiltration are located downstream of the sowing section. Optionally, there are also spring-loaded elements levelling the soil. Moreover, the unit may be equipped with an applicator for granulates and microfertilizers, plant protection agents, although with a fixed, specified location of their batching.

The benefits of the strip-till technology mostly manifest under unfavourable soil conditions, such as mosaic soil or severely dried soil. Then, traditional cultivation using a plough is difficult, and plants sprout late and unevenly.

Strip-till technology together with simultaneous sowing has some drawbacks. It requires careful fragmentation and even spreading of post-harvesting residues (straw, beetroot leaves, inter-cultivation biomass) across the whole field. Such field preparation eliminates "clogging" of the operating elements of the units with plant residues, and allows for precise sowing, especially in narrow rows. If the straw is removed from the field and its surface is not covered with mulch, the strip-till and sowing must be performed immediately after harvesting the forecrop. Otherwise, in the absence of rain, the soil dries deeply and there are problems with plant vegetation. Systems and methods of soil cultivation leaving a lot of plant residues on the field surface, including the strip-till technology, are risky due to weeding structure change, as well as increased chance of diseases and pest occurrence.

It is believed that the strip-till of the soil combines the positive aspects of deep cultivation and zero cultivation. The method can be used in for rape, sugar beet, corn and sunflower. However, it creates similar soil conditions within all cultivated strips, thus limiting simultaneous cultivation of plants with different requirements.

The cultivation units for strip-till cultivation consist of tools cultivating the soil - a cultivator, as well as a sower for sowing the seeds. However, modern tools for strip-till are combined with fertilizer batchers. As mentioned before, the essential elements of such agricultural machine are as follows: scarifying elements (e.g. scarifying coulters and/or cutting disks), fertilizer batching devices (e.g. fertilizing coulters), sowing devices (e.g. sowing coulters), pressing and compacting elements (e.g. wheels or rollers). Scarifying elements are placed spaced apart from one another to scarify the soil only at the locations they work in. The spacing of these elements depends on the type of plants cultivated. From a few to a dozen strips (depending on the number of scarifying elements) of soil scarified to a depth of several dozen centimetres and a width of a dozen centimetres of similar soil properties for the cultivation of plants within each strip are made within a single passage of the unit. Non-disturbed strips of soil are left between them and represent at least half or even 2/3 of the whole area subject to cultivation.

In strip-till cultivation using the unit it is possible to cultivate the soil, apply fertilizer, sow the seeds of cultivated plants, and sometimes even sow the seeds of cover crops and apply plant protection agents, but with limited choice concerning the selection of their placement within the soil in relation to the seeds of the cultivated plants, within a single passage of the machine. Such cultivation translates to major fuel and time savings. The system also guarantees less water evaporation from the soil, more uniform sprouting of plants, and more crops under extreme weather conditions - dry or wet summers.

The application of fertilizers using this method is precise. They are batched only to the cultivated soil space, which causes the food components to be in the direct vicinity of the plant roots, and therefore they can be used more effectively by the plants. Thus, soil deprived of cultivated plants is not fertilized, therefore reducing the risk of environmental contamination. The amount of used fertilizers is less per unit of area. However, too close a distance between the fertilizer and plant roots may cause their damage and the withering of young plants. Wide spacing of rows and lack of ploughing favours pests, e.g. weeding and the occurrence of self-seeding of forecrop plants. Too long an application of this method on the field forces the change of the cultivation direction (to transverse). However, this is not always possible due to field configuration.

DE102012010243A1 discloses a method in which there are separate rows produced for seeds and for fertilizer - the fertilizer is applied from a side and from a bottom of the row for seeds, by means of a separate tooth that is curved such way that the tip thereof is placed under the row for the seeds.

US2005263049A1 describes a no-till method of plant cultivation. In this method the blade shallowly cuts the ground and at the same it serves for application both seeds and fertilizer.

FR2662572A1 refers to another method of ground cultivation. This method proposes reversing the top layer of the ground of the cultivated strip. The fertilizer is applied scattered on the ground surface. The fertilizer is applied before the elements scarifying ground in the cultivated strip. This document discloses an active cultivation (tiller).

PL231360B1 discloses a method for strip-till plant cultivation in which during one pass the mulch is cut, the ground strip is cut, the remains are set aside, the ground is scarified, the fertilizer is deeply applied, the ground scar is closed, the ground is compacted and levelled and then the seeds are sown. After compacting but before sowing, fertilizer is applied shallowly.

EA005351B1 mentions introducing a fertilizer into the cultivated ground strip, which fertilizer creates a fertilizer flow.

The objective of this solution is to eliminate drawbacks of the prior art, including reduction of pest occurrence, universalization of plant cultivation method according to different habitat conditions, and to the varying requirements of cultivated plants in relation to agrotechnological elements, as well as to increase the number of agrotechnological operations performed within a single passage.

This solution allows for better fragmentation and distribution of plants residues, and therefore reduces the chance of clogging the unit's elements and deterioration of their operation or damage. Moreover, the option to place the plant residues in different arrangements, depending on the needs and agrotechnological conditions, ensures faster drying of the soil or limits its drying.

The invention enables more precise batching of fertilizer, not in the direct vicinity of the cultivated plant seeds, limiting the contact of sown and sprouting seeds with the fertilizer under different requirements of individual cultivated plants.

Moreover, the invention makes the individualization of soil compaction within single strips possible, ensuring the same soil density within different strips (as required in order to unify sprouting conditions of the same species) or different soil density within other strips (this enables sowing plants of different requirements concerning soil compaction within the next strips - mixes, ecological cultivation).

The method according to the invention also allows for adjusting the depth of sowing the seeds and placing the plants in relation to the soil surface, with positive impact on their sprouting, because the ridges formed by the sowing coulters, with the option to control their height, protect young plants against environmental conditions - wind and frost.

The invention also allows the operator to obtain different depths of sowing the cover crop and different widths of cultivated plant strips, and therefore to differentiate the depth of covering the cover crop with soil.

Moreover, the invention provides control over microgranulate flows to different locations in relation to the coulter sowing the cultivated plant seeds, and therefore allows for their precise activation depending on the needs of the cultivated plant, cover crop and the necessity to limit pests.

The varying profile of the depth and compacting wheel, adapted to the flows of the sown seeds and type of soil, provides optimum conditions for plant sprouting and the activation of microgranulates under different habitat conditions.

To sum up, the advantage of the method according to the invention is thus a nonhomogeneous effect of working elements of the multi-functional, hybrid machines (farming unit) on cultivated field soil. After a single passage, strips and flows of soil of differentiated properties and agrotechnological functions are formed.

The subject of the invention is the plant cultivation method, wherein cultivated strips of soil, where crop seeds are to be sown, are scarified down to 35 cm, wherein non-cultivated strips are left between these strips, wherein along one passage of a machine equipped with a disc coulter, scarifying teeth, a fertilizer dosing device, pressing wheels, seeds sowing coulters, and depth and compacting wheels, mulch is removed and left on non-cultivated strips, and the soil is scarified within cultivated strips. After soil scarification, mineral fertilizers are placed within the scarified strips, then the cultivated strips are compacted using the pressing wheel of the machine, and after compaction crop seeds are sown, and then the soil is compacted using the depth and compacting wheel of the machine, maintaining the depth of the sowing and water infiltration. The invention is characterized by the cultivated strip being divided to cultivated flows and fertilizer flows, disposed both in a horizontal arrangement and a vertical arrangement, wherein the mineral fertilizer is applied using the scarifying tooth of the machine.

Preferably, in the horizontal arrangement the cultivated strip is divided into two cultivated flows with a strip of fertilizer therebetween, wherein the mineral fertilizer is applied.

More preferably, the cultivated strip is divided into flows cultivated using the scarifying tooth equipped with two scarifiers located on the coulter standard sides.

It is also preferable that the mineral fertilizer in the fertilizer flow is also applied on the cultivated strip edge, therefore creating one cultivated flow in a horizontal arrangement.

Even more preferably, the cultivated strip is divided into flows cultivated using the scarifying tooth equipped with one scarifier located on the coulter standard side.

It is preferable that the cultivated strip is divided into two cultivated flows, in a horizontal arrangement, with fertilizer being applied in one fertilizer strip therebetween, and one deeper located cultivated flow, in a vertical arrangement.

More preferably, the cultivated strip is divided into flows cultivated using the scarifying tooth equipped with two levels of scarifiers located on the coulter standard sides.

It is also preferable that the fertilizer is centrally applied in the deeper cultivated flow.

It is preferable that short mulch is placed in two flows of biomass within each non-cultivated strip.

It is preferable that short mulch is placed using a disc coulter operating at the angle adjusted in relation to the travel direction.

It is also preferable that long mulch is placed in two flows of biomass within each non-cultivated strip.

It is also preferable that long mulch is placed in one flow of biomass every second non-cultivated strip.

It is preferable that the fertilizer application depth is controlled using the fertilizer channel outlet's height control of the fertilizer batching device.

It is preferable that each cultivated strip is compacted individually using a pneumatic pressing wheel, where the compaction is controlled by independent hydraulic pressure of each press wheel, air pressure control in the wheel or tyre profile.

It is preferable that the cultivated plant seeds are sown within a single flow of seeds asymmetrical in relation of the centrally aligned fertilizer flow in the cultivated strip.

It is also preferable that the cultivated plant seeds are sown in two flows of seeds symmetrical in relation of the centrally aligned fertilizer flow.

It is preferable that the height of the ridges formed by the sowing coulter is controlled by changing the sowing coulter.

More preferably, the cultivated plant seeds are sown using the sowing coulter with asymmetric seeds outlet.

It is also preferable that the cultivated plant seeds are sown using the sowing coulter with symmetric seeds outlet.

It is preferable that together with sowing the cultivated plant seeds, cover crop seeds are sown, wherein the cover crop seeds are directed in front of, behind or next to the sowing coulter that sows the cultivated plant seeds, within one or two flows of cover crop.

It is preferable that the cover crop seeds are introduced to the sowing coulter that sows the cultivated plant seeds.

It is preferable that the microgranulate flow containing mineral fertilizers or plant protection agents is directed upstream or downstream the coulter sowing the cultivated plant seeds, on one or two sides of the cultivated plant seed flow.

It is preferable that the microgranulate flow containing mineral fertilizers or plant protection agents is introduced to the sowing coulter and mixed with the cultivated plant seed flow.

It is preferable that the microgranulate flow containing mineral fertilizer or plant protection agents is directed on the surface of the cultivated strips behind the depth and compacting wheel.

It is also preferable that the microgranulate flow containing mineral fertilizer or plant protection agents is directed to non-cultivated strips of soil.

It is preferable that the soil compaction using the depth and compacting wheel is controlled by changing the depth and compacting wheel to a wheel with a different profile.

It is also preferable, that after sowing the seeds, that the soil is levelled using a scraping and levelling harrow located downstream the sowing coulter, with regulated, shifted teeth and controlled teeth inclination in relation to the soil surface.

It is preferable, moreover, that the plant protection agents, biostimulators or fertilizer solutions are sprayed using guide vanes or covers of the working fluid streams.

It is preferable that the working fluid of plant protection agents, biostimulators or fertilizer solutions are sprayed within the cultivated strip, within the non-cultivated strip, or across the whole soil surface.

It is preferable that the working fluid of plant protection agents, biostimulators or fertilizer solutions are sprayed upstream or downstream the coulter sowing the cultivated plant seeds.

It is also preferable that the working fluid of plant protection agents, biostimulators or fertilizer solutions is additionally sprayed upstream or downstream of the scraping and levelling harrow.

The subject of the invention is presented in the embodiments on the figures, where fig. 1 presents a diagram of cultivation according to one embodiment, fig. 2 presents a diagram of cultivation according to another embodiment, fig. 3 presents a diagram of cultivation according to yet another embodiment, fig. 4 presents one of the embodiments showing the mulch deposition locations, fig. 5 presents an alternative embodiment showing the mulch deposition locations, fig. 6 presents one of the embodiments showing the cultivated plant seeds' sowing locations, fig. 7 presents an alternative embodiment showing the cultivated plant seeds' sowing locations, fig. 8 and 9 present embodiments showing the cover crop seeds' sowing locations, fig. 10, 11 and 12 present embodiments showing the control of microgranulate flow containing mineral fertilizers or plant protection agents, fig. 13 presents one of the embodiments of the scarifying tooth, fig. 14 presents another embodiment of the scarifying tooth, fig. 15 presents yet another embodiment of the scarifying tooth, fig. 16 presents one of the embodiments of the sowing coulter, fig. 17 presents another embodiment of the sowing coulter.

In the plant cultivation method according to the invention, the cultivated strips 1 of soil, where the cultivated plant seeds are to be sown, are scarified down to 35 cm. Between the strips 1, non-cultivated strips 3 are left, wherein along one passage of a machine equipped with a disc coulter, scarifying teeth, a fertilizer dosing device, pressing wheels, seed sowing coulters 13, and depth and compacting wheels 9, mulch is removed and left on non-cultivated strips 13, the soil is scarified within cultivated strips 1, after soil scarification, mineral fertilizers are placed within the scarified strips, then the cultivated strips 1 are compacted using a pressing wheel of the machine, and after compaction crop seeds are sown, and then the soil is compacted using the depth and compacting wheel 9 of the machine, maintaining the depth of the sowing and water infiltration. The cultivated strip 1 is divided into cultivated flows 2 and fertilizer flows 4 wherein the mineral fertilizer is applied using the scarifying tooth of the machine.

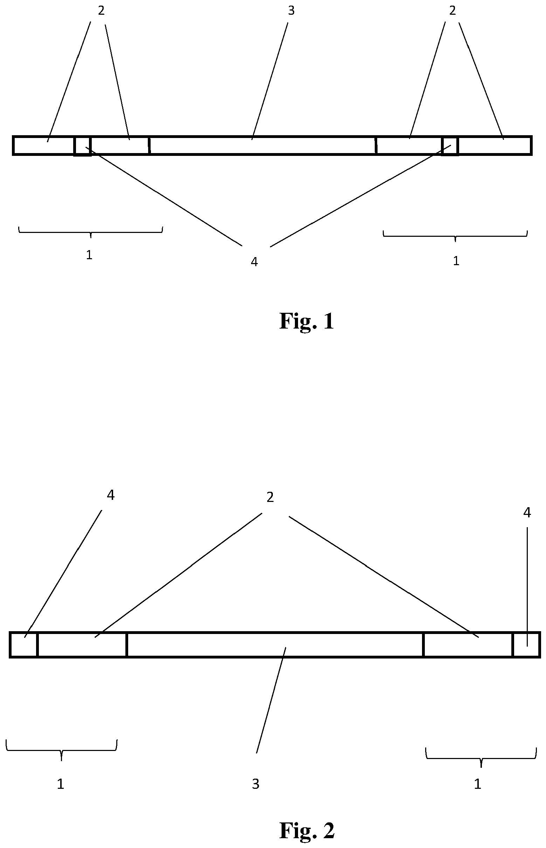

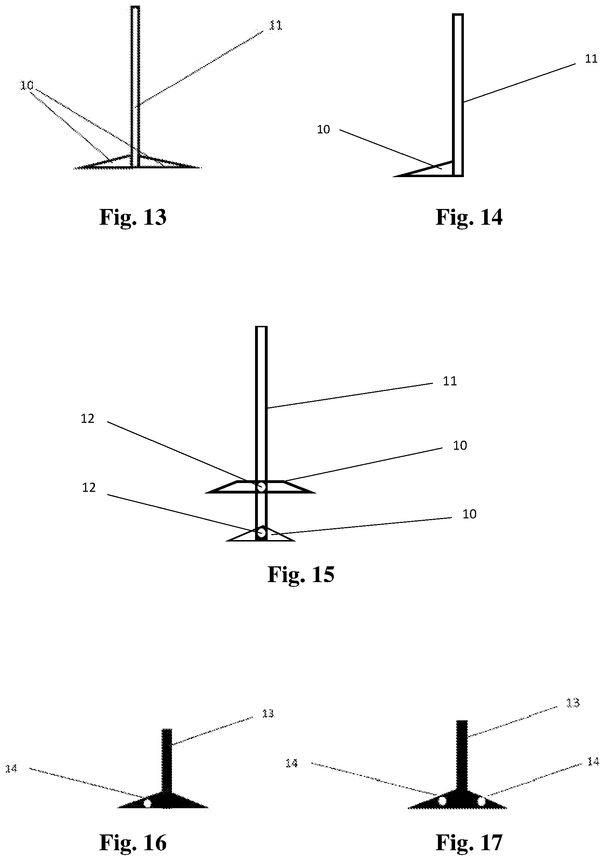

According to the embodiment shown in fig. 1 the cultivated strip 1 is divided into two flows 2 cultivated in the horizontal arrangement with a strip of fertilizer 4 between, wherein the mineral fertilizer is applied. Non-cultivated strip 3 is left between the cultivated strips 1. It is preferable to use a scarifying tooth equipped with two scarifiers 10 arranged on the sides of the coulter standard 11, as shown in fig. 13.

Fig. 2 shows another embodiment of the method according to the invention, wherein the mineral fertilizer in the fertilizer flow 4 is also applied on the cultivated strip 1 edge, therefore creating one cultivated flow 2 in the horizontal arrangement. It is preferable to use a scarifying tooth equipped with one scarifier 10 arranged on one side of the coulter standard 11, as shown in fig. 14.

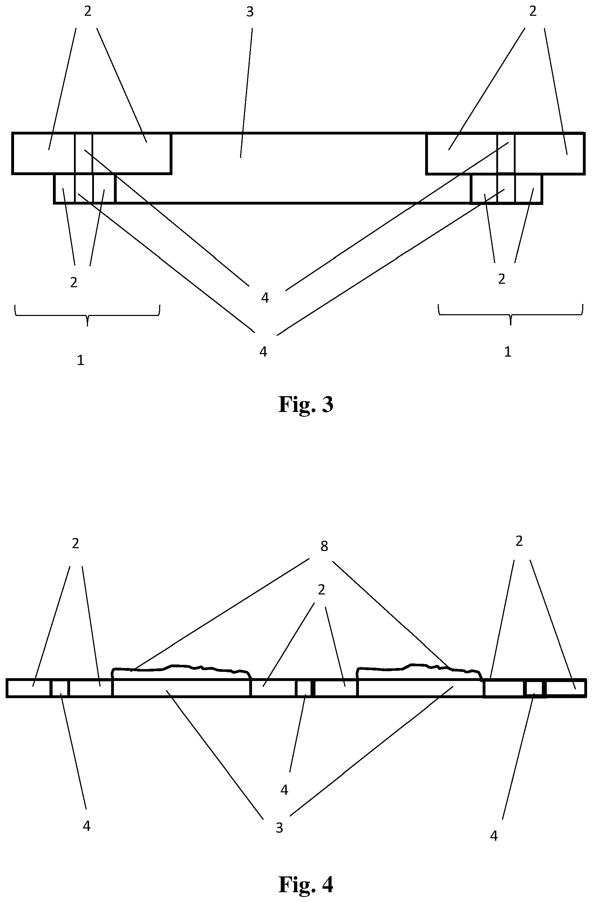

The embodiment shown in fig. 3 shows the method according to the invention, wherein the cultivated strip 1 is divided into two cultivated flows 2, in the horizontal arrangement, with fertilizer being applied in one fertilizer strip 4 between and one deeper located cultivated flow 2, in the vertical arrangement. According to this embodiment, the fertilizer is centrally applied in the deeper cultivated flow 2. It is preferable to use a scarifying tooth equipped with two levels of scarifiers 10 arranged on the sides of the coulter standard 11, as shown in fig. 15. Fig. 15 also shows the fertilizer channel outlets 12. According to one embodiment of the invention, the fertilizer application depth is controlled by adjusting the height of these outlets 12.

According to a preferred embodiment of the invention, presented in fig. 4, short or long mulch is placed in two flows of biomass within each non-cultivated strip 3. Short mulch may be placed using a disc coulter operating at the angle adjusted in relation to the travel direction.

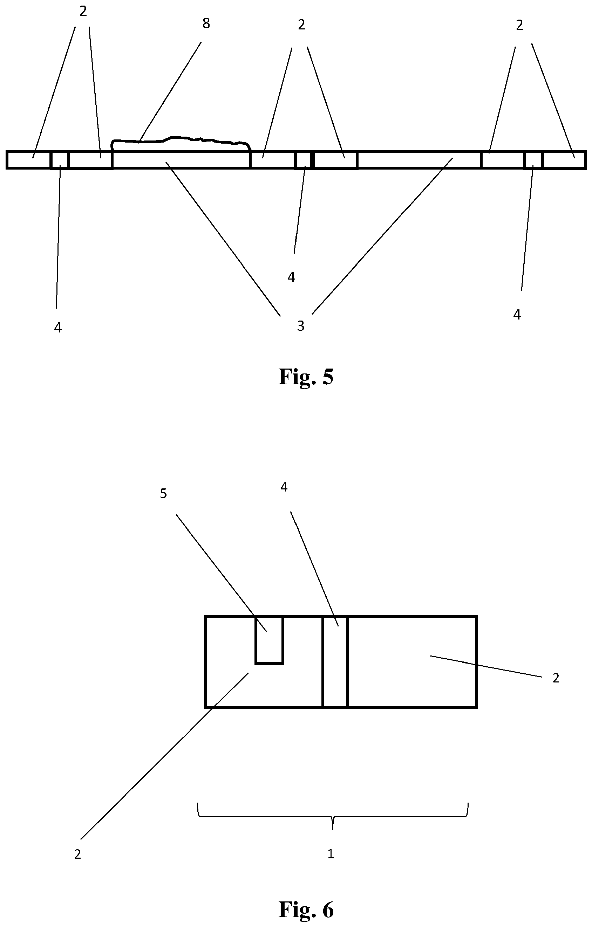

According to one embodiment shown in fig. 5, long mulch is placed in one flow of biomass 8 every second non-cultivated strip 3.

According to one embodiment, each cultivated strip 1 is compacted individually using a pneumatic pressing wheel. The compaction is controlled by independent hydraulic pressure of each press wheel, air pressure control in the wheel or tyre profile.

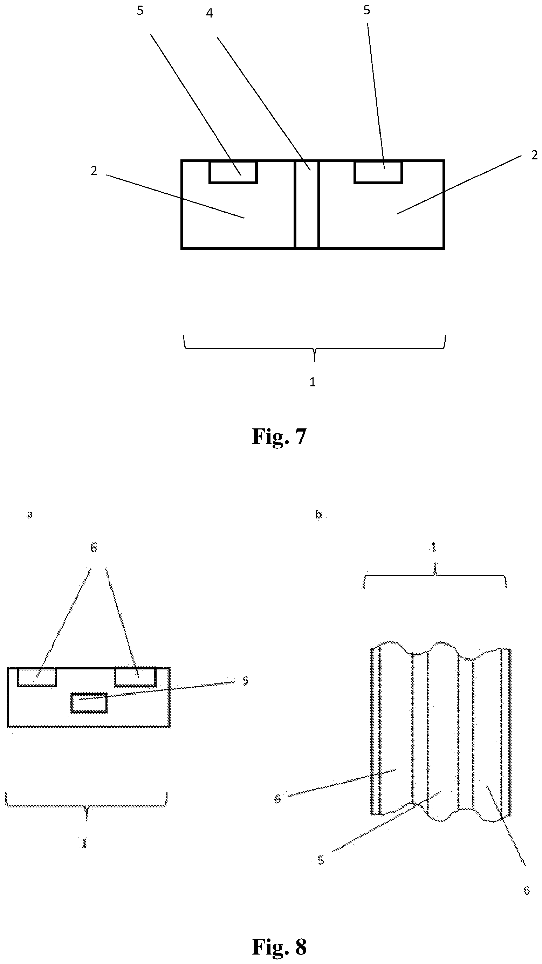

Fig. 6 shows that the cultivated plant seeds can be sown within a single flow of seeds 5 asymmetrical in relation of the centrally aligned fertilizer flow 4 in the cultivated strip 1. Preferably, a sowing coulter 13 with asymmetrical seed 14 outlet is used, as shown in fig. 16. Alternatively, (fig. 7) the cultivated plant seeds can be sown in two flows of seeds 5, symmetrical in relation to the centrally aligned fertilizer flow 4. In order to do that, one may use a sowing coulter 13 with a symmetrical seed 14 outlet, as shown in fig. 17.

The height of the ridges formed by the sowing coulter 13 is controlled, in a preferred embodiment, by changing the sowing coulter 13.

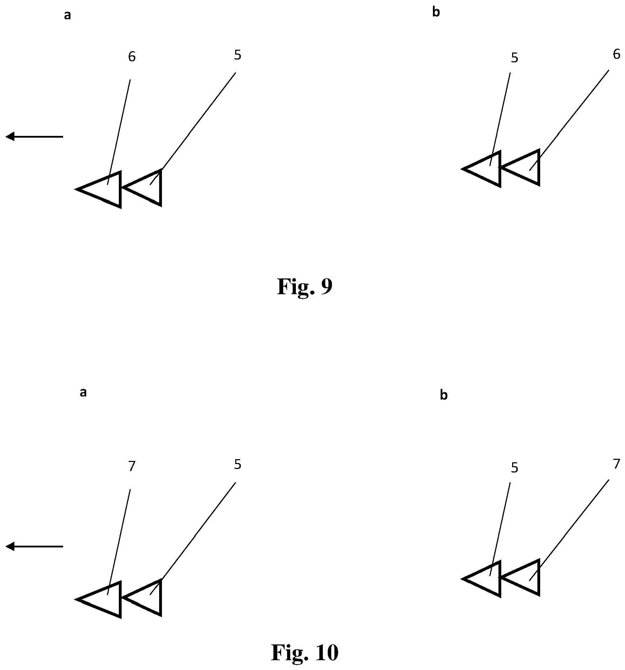

According to one embodiment, together with sowing the cultivated plant seeds, cover crop seeds are sown, wherein the cover crop seeds are directed in front of, behind or next to the sowing coulter 13 that sows the cultivated plant seeds within one or two flows of cover crop 6. Fig. 8 presents an embodiment, wherein the cover crop plant seeds are sown in two flows of cover crop 6 next to the sowing coulter 13. Fig. 9 shows an embodiment where the cover crop seeds are directed upstream (fig. 9a) and downstream (fig. 9b) of the sowing coulter 13. The arrow shows the cultivation direction. The coulter 13 is not shown in the figures. According to one embodiment, the cover crop seeds are introduced to the sowing coulter 13 that sows the cultivated plant seeds.

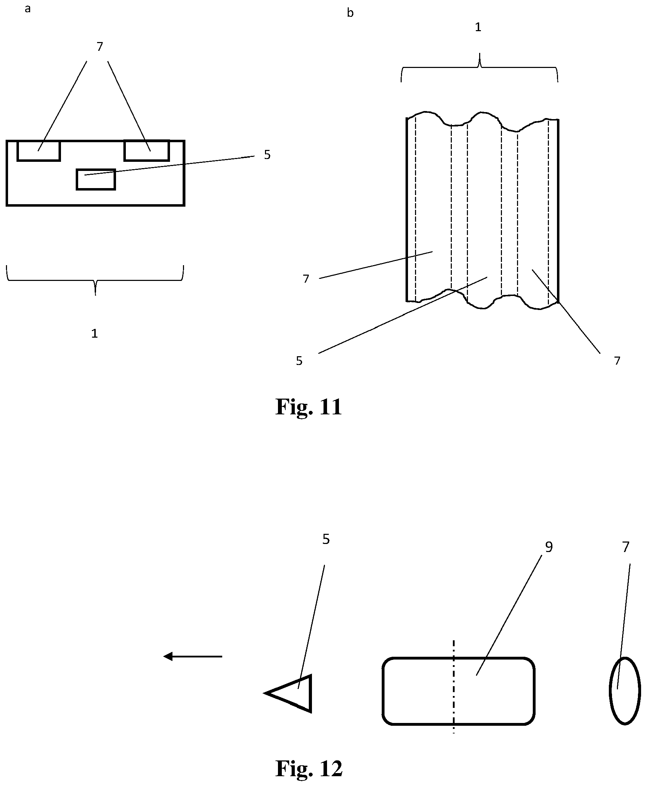

According to one embodiment, the microgranulate flow 7 containing mineral fertilizers or plant protection agents is directed upstream (fig. 10a, the arrow shows the cultivation direction) or downstream (fig. 10b, the arrow shows the cultivation direction) of the coulter 13 sowing the cultivated plant seeds on one or both sides of the cultivated plant seed flow 5 (fig. 11). According to one embodiment, the microgranulate flow 7 is introduced to a sowing coulter 13 and mixed with the seed flow 5 of the cultivated plant. According to one embodiment, the microgranulate flow 7 is directed to the cultivated strips 1 surface downstream of the depth and compacting wheel 9 (fig. 12, the arrow shows the cultivation direction). According to another embodiment, the microgranulate flow 7 is directed into the non-cultivated strip 3 of soil.

According to one embodiment, the soil compaction using the depth and compacting wheel 9 is controlled by changing the depth and compacting wheel 9 to a wheel with a different profile.

According to one embodiment, after sowing the seeds, the soil is levelled using a scraping and levelling harrow located downstream of the sowing coulter 13, with regulated, shifted teeth and controlled teeth inclination in relation to the soil surface.

In a method according to the invention, the plant protection agents, biostimulators or fertilizer solutions may be sprayed using guide vanes or covers of the working fluid streams. The working fluid can be sprayed within the cultivated strip 1, non-cultivated strip 3, or across the whole soil, upstream or downstream of the coulter 14 sowing the cultivated plant seeds. Alternatively, the working fluid is sprayed upstream or downstream of the scraping and levelling harrow.

Of course, the invention is not limited to the shown embodiments, and various modifications within the scope of the claims are possible.

## Claims

1. A plant cultivation method, wherein cultivated strips (1) of soil, where crop seeds are to be sown, are scarified down to 35 cm, wherein non-cultivated strips (3) are left between these strips (1), wherein along one passage of a machine equipped with a disc coulter, scarifying teeth, a fertilizer dosing device, pressing wheels, seed sowing coulters (13), and depth and compacting wheels (9), mulch is removed and left on non-cultivated strips (3), the soil is scarified within cultivated strips (1), after soil scarification, mineral fertilizers are placed within the scarified cultivated strips (1), then the cultivated strips (1) are compacted using a pressing wheel of the machine, and after compaction, crop seeds are sown therein, and then the soil is compacted using the depth and compacting wheel (9) of the machine, maintaining the depth of the sowing and water infiltration, **characterized in that** the cultivated strip (1) is divided into cultivated flows (2) and fertilizer flows (4), disposed both in a horizontal arrangement and a vertical arrangement, wherein mineral fertilizer is applied using the scarifying tooth of the machine.

2. The method according to claim 1 **characterized in that** in the horizontal arrangement the cultivated strip (1) is divided into two cultivated flows (2) with a strip of fertilizer (4) therebetween, wherein the mineral fertilizer is applied; preferably, the cultivated strip (1) is divided into flows (2) cultivated using the scarifying tooth equipped with two scarifiers (10) located on the coulter standard (11) sides.

3. The method according to claim 1 **characterized in that** the mineral fertilizer in the fertilizer flow (4) is also applied on the cultivated strip (1) edge, therefore creating one cultivated flow (2) in the horizontal arrangement; preferably, the cultivated strip (1) is divided into flows (2) cultivated using the scarifying tooth equipped with one scarifier (10) located on the coulter standard (11) side.

4. The method according to claim 1 **characterized in that** the cultivated strip (1) is divided into two cultivated flows (2), in the horizontal arrangement, with fertilizer being applied in one fertilizer strip (4) therebetween, and one deeper located cultivated flow (2), in the vertical arrangement; preferably, the cultivated strip (1) is divided into flows (2) cultivated using the scarifying tooth equipped with two levels of scarifiers (10) located on the coulter standard (13) sides.

5. The method according to claim 4 **characterized in that** the fertilizer is centrally applied in the deeper cultivated flow (2).

6. The method according to claim 1 **characterized in that** short mulch is placed in two flows of biomass (8) within each non-cultivated strip (3); preferably, the short mulch is placed using a disc coulter operating at the angle adjusted in relation to the travel direction.

7. The method according to claim 1 **characterized in that** long mulch is placed in two flows of biomass (8) within each non-cultivated strip (3); preferably, the long mulch is placed in one flow of biomass (8) every second non-cultivated strip (3).

8. The method according to claim 1 **characterized in that** the fertilizer application depth is controlled using the fertilizer channel outlets' (12) height control of the fertilizer batching device.

9. The method according to claim 1 **characterized in that** each cultivated strip (1) is compacted individually using a pneumatic pressing wheel, where the compaction is controlled by independent hydraulic pressure of each press wheel, air pressure control in the wheel or tyre profile.

10. The method according to claim 2 **characterized in that** the cultivated plant seeds are sown within a single flow of seeds (5) asymmetrical in relation to the centrally aligned fertilizer flow (4) in the cultivated strip (1); alternatively, they are sown in two flows of seeds (5) symmetrical in relation to the centrally aligned fertilizer flow (4).

11. The method according to claim 1 **characterized in that** the height of the ridges formed by the sowing coulter (13) is controlled by changing the sowing coulter (13).

12. The method according to claim 10 **characterized in that** the cultivated plant seeds are sown using the sowing coulter (13) with asymmetric seed outlet (14); alternatively and respectively, they are sown using the sowing coulter (13) with symmetric seed outlet (14).

13. The method according to claim 1 **characterized in that** together with sowing the cultivated plants seeds, cover crop seeds are sown, wherein the cover crop seeds are directed in front of, behind or next to the sowing coulter (13) that sows the cultivated plant seeds, within one or two flows of cover crop (6); alternatively, they are introduced to the sowing coulter (13) that sows the cultivated plant seeds.

14. The method according to claim 1 **characterized in that** the microgranulate flow (7) containing mineral fertilizers or plant protection agents is directed upstream or downstream of the coulter (13) sowing the cultivated plant seeds, on one or two sides of the cultivated plant seed flow (5); alternatively, it is introduced to the sowing coulter (13) and mixed with the cultivated plant seeds flow (5).

15. The method according to claim 1 **characterized in that** the microgranulate flow (7) containing mineral fertilizer or plant protection agents is directed on the surface of the cultivated strips (1) behind the depth and compacting wheel (9); alternatively, it is directed to non-cultivated strips (3) of soil.

16. The method according to claim 1 **characterized in that** the soil compaction using the depth and compacting wheel (9) is controlled by changing the depth and compacting wheel (9) to a wheel with a different profile.

17. The method according to claim 1 **characterized in that** after sowing the seeds, the soil is levelled using a scraping and levelling harrow located downstream of the sowing coulter (13), with regulated, shifted teeth and controlled teeth inclination in relation to the soil surface.

18. The method according to claim 1 **characterized in that** the plant protection agents, biostimulators or fertilizer solutions are sprayed using guide vanes or covers of the working fluid streams.

19. The method according to claim 18 **characterized in that** the working fluid of plant protection agents, biostimulators or fertilizer solutions are sprayed within the cultivated strip (1), within the non-cultivated strip (3) or across the whole soil surface; alternatively they are sprayed upstream or downstream of the coulter (13) sowing the cultivated plant seeds.

20. The method according to claim 19 **characterized in that** the working fluid of plant protection agents, biostimulators or fertilizer solutions is additionally sprayed upstream or downstream of the scraping and levelling harrow.

## Patentansprüche

1. Pflanzenbauverfahren, bei dem die kultivierte Bodenstreifen (1), auf denen die Pflanzensamen ausgesät werden sollen, bis zu 35 cm tief vertikutiert werden, wobei zwischen diesen Streifen (1) nicht kultivierte Streifen (3) belassen werden, wobei entlang eines Durchfahrt einer Maschine, die mit einem Scheibenschar, Vertikutierzähnen, einer Düngerdosiervorrichtung, Pressrädern, Säschar (13) und Tiefen- und Verdichtungsrädern (9) ausgestattet ist, ein Mulch entfernt und auf den nicht kultivierten Streifen (3) belassen wird, der Boden innerhalb der kultivierten Streifen (1) vertikutiert wird, nach dem Vertikutieren des Bodens Mineraldüngern innerhalb der vertikutierten kultivierten Streifen (1) abgelegt wird, dann werden die kultivierten Streifen (1) mit dem Druckrad der Maschine verdichtet und nach der Verdichtung werden darin Pflanzensamen ausgesät, und dann wird der Boden mit dem Tiefen- und Verdichtungsrad (9) einer Maschine weiter verdichtet, wobei die Tiefe der Aussaat und die Wasserinfiltration beibehalten werden, **dadurch gekennzeichnet, dass** der kultivierte Streifen (1) in Anbaustränge (2) und Düngstränge (4) aufgeteilt wird, die sowohl in einer horizontalen Ausrichtung als auch in einer vertikalen Ausrichtung angeordnet sind, wobei der Mineraldünger mit dem Vertikutierzahns der Maschine aufgebracht wird.

2. Verfahren nach Anspruch 1 **dadurch gekennzeichnet, dass** der kultivierte Streifen (1) in der horizontalen Ausrichtung in zwei Anbaustränge (2) mit einem Düngerstrang (4) dazwischen aufgeteilt wird, wobei der Mineraldünger dosiert wird; vorzugsweise wird der kultivierte Streifen (1) in Stränge (2) aufgeteilt, die mit einem Vertikutierzahn bearbeitet werden, der mit zwei Vertikutierern (10) ausgestattet ist, die an den Seiten eines Schars (11) angeordnet sind.

3. Verfahren nach Anspruch 1 **dadurch gekennzeichnet, dass** der Mineraldünger im Düngstrang (4) auch auf den Rand des kultivierten Streifens (1) aufgebracht wird, so dass ein Anbaustrang (2) in der horizontalen Ausrichtung entsteht; vorzugsweise wird der kultivierte Streifen (1) in Stränge (2) unterteilt, die mit einem Vertikutierzahn bearbeitet werden, der mit einem Vertikutierer (10) ausgestattet ist, der an der Seite eines Schars (11) angeordnet ist.

4. Verfahren nach Anspruch 1 **dadurch gekennzeichnet, dass** der kultivierte Streifen (1) in zwei Anbaustränge (2) in der horizontalen Ausrichtung unterteilt wird, wobei der Dünger auf den Düngsträngen (4) dazwischen ausgebracht wird, und in einen tiefer gelegenen Anbaustrang (2) in der vertikalen Ausrichtung; vorzugsweise wird der kultivierte Streifen (1) in Stränge (2) unterteilt, die mit dem Vertikutierzahn bearbeitet werden, der mit zwei Ebenen der Vertikutierer (10) ausgestattet ist, die an den Seiten eines Schars (13) angeordnet sind.

5. Verfahren nach Anspruch 4 **dadurch gekennzeichnet, dass** der Dünger mittig in den tieferen Anbaustrang (2) eingebracht wird.

6. Verfahren nach Anspruch 1 **dadurch gekennzeichnet, dass** der Kurzmulch in zwei Strängen der Biomasse (8) innerhalb jedes nicht kultivierten Streifens (3) abgelegt wird; vorzugsweise wird der Kurzmulch mit einem Scheibenschar abgelegt, das unter einem von der Fahrtrichtung abhängig eingestellten Winkel betrieben wird.

7. Verfahren nach Anspruch 1 **dadurch gekennzeichnet, dass** der Langmulch in zwei Strängen der Biomasse (8) innerhalb jedes nicht kultivierten Streifens (3) abgelegt wird; vorzugsweise wird der Langmulch in einem Strang der Biomasse (8) in jedem zweiten nicht kultivierten Streifen (3) abgelegt.

8. Verfahren nach Anspruch 1 **dadurch gekennzeichnet, dass** die Düngungstiefe über die Höhe der Düngerkanalauslässe (12) der Düngerdosiereinrichtung eingestellt wird.

9. Verfahren nach Anspruch 1 **dadurch gekennzeichnet, dass** jeder kultivierte Streifen (1) einzeln mit einem pneumatischen Druckrad verdichtet wird, wobei die Verdichtung durch den unabhängig eingestellten hydraulischen Druck jedes Druckrades, durch die Luftdruckkontrolle im Rad oder durch das Reifenprofil vorgegeben wird.

10. Verfahren nach Anspruch 2 **dadurch gekennzeichnet, dass** die Pflanzensamen in einem einzigen Saatstrang (5) asymmetrisch zum mittig angeordneten Düngerstrang (4) im kultivierte Streifen (1) ausgesät werden; alternativ werden sie in zwei Saatgutsträngen (5) symmetrisch zum mittig angeordneten Düngerstrang (4) ausgesät.

11. Verfahren nach Anspruch 1 **dadurch gekennzeichnet, dass** die Höhe der durch das Säschar (13) gebildeten Mulden durch den Austausch des Säschars (13) verstellt wird.

12. Verfahren nach Anspruch 10 **dadurch gekennzeichnet, dass** die Pflanzensamen mit Hilfe eines Säschars (13) mit asymmetrischem Saatgutauslass (14) ausgesät werden; alternativ und entsprechend werden sie mit einem Säschar (13) mit symmetrischem Saatgutauslass (14) ausgesät.

13. Verfahren nach Anspruch 1 **dadurch gekennzeichnet, dass** die Samen der Gründüngung zusammen mit der Aussaat der Kulturpflanzensamen ausgesät werden, wobei die Samen der Gründüngung vor, hinter oder neben dem Säschar (13), das die Kulturpflanzensamen aussät, in einem oder zwei Strängen der Gründüngung (6) angeordnet werden; alternativ werden sie in das Säschar (13), das die Kulturpflanzensamen aussät, eingeführt.

14. Verfahren nach Anspruch 1 **dadurch gekennzeichnet, dass** der Mikrogranulat-Strang (7), der Mineraldünger oder Pflanzenschutzmittel enthält, vor oder nach dem Säschar (13), das die Kulturpflanzensamen aussät, auf eine oder zwei Seiten des Kulturpflanzensamenstrangs (5) ausgerichtet wird; alternativ wird er in das Säschar (13) eingeführt und mit dem Kulturpflanzensamenstrang (5) vermischt.

15. Verfahren nach Anspruch 1 **dadurch gekennzeichnet, dass** der Mikrogranulat-Stang (7), der Mineraldünger oder Pflanzenschutzmittel enthält, auf die Oberfläche der kultivierten Streifen (1) hinter dem Tiefen- und Verdichtungsrad (9) ausgerichtet wird; alternativ wird er auf die nicht kultivierten Streifen (3) des Bodens ausgerichtet.

16. Verfahren nach Anspruch 1 **dadurch gekennzeichnet, dass** die Bodenverdichtung mithilfe eines Tiefen- und Verdichtungsrades (9) durch den Austausch des jeweiligen Tiefen- und Verdichtungsrades (9) gegen ein Rad mit einem anderen Profil eingestellt wird.

17. Verfahren nach Anspruch 1 **dadurch gekennzeichnet, dass** der Boden nach der Aussaat des Saatguts mit Hilfe einer dem Säschar (13) nachgeschalteten Schab- und Planieregge mit verstellten, verschobenen Zähnen und eingestellter Neigung der Zähne gegenüber der Bodenoberfläche nivelliert wird.

18. Verfahren nach Anspruch 1 **dadurch gekennzeichnet, dass** die Pflanzenschutzmittel, Biostimulatoren oder Düngemittellösungen mit Hilfe von Drehteilern oder Abdeckungen der Arbeitsmittelströme aufgetragen werden.

19. Verfahren nach Anspruch 18 **dadurch gekennzeichnet, dass** die Zubereitung aus den Pflanzenschutzmitteln, Biostimulatoren oder Düngerlösungen auf den kultivierten Streifen (1), auf den nicht kultivierten Streifens (3) oder über die gesamte Bodenoberfläche aufgetragen wird; alternativ werden sie vor oder hinter dem Säschar (13) aufgetragen, das die Kulturpflanzensamen aussät.

20. Verfahren nach Anspruch 19 **dadurch gekennzeichnet, dass** die Zubereitung aus den Pflanzenschutzmitteln, Biostimulatoren oder Düngerlösungen zusätzlich vor oder nach der Abstreif- und Nivellieregge aufgetragen wird.

## Revendications

1. Procédé de culture de plantes dans lequel des bandes cultivées (1) de sol où des graines de culture doivent être semées, sont scarifiées jusqu'à 35 cm, dans lequel des bandes non cultivées (3) sont laissées entre ces bandes (1) dans lequel le long d'un passage d'une machine équipée d'un disque de herse, de dents de scarification, d'un dispositif de dosage d'engrais, de roues de pressage, de coutre semeur (13) et de roues de profondeur et de compactage (9), le paillis est enlevé et laissé sur les bandes non cultivées (3), le sol est scarifié à l'intérieur de bandes cultivées (1), après la scarification du sol, des engrais minéraux sont placés à l'intérieur des bandes cultivées scarifiées (1), puis les bandes cultivées (1) sont compactées à l'aide d'une roue de compression de la machine, et après le compactage, des graines de culture y sont semées, et ensuite le sol est compacté à l'aide de la roue de profondeur et de compactage (9) de la machine, en maintenant la profondeur du semis et l'infiltration de l'eau, **caractérisé en ce que** la bande cultivée (1) est divisée en flux cultivés (2) et en flux d'engrais (4) disposés à la fois dans une disposition horizontale et une disposition verticale, dans lequel l'engrais minéral est appliqué à l'aide de la dent de scarification de la machine.

2. Procédé selon la revendication 1, **caractérisé en ce que** dans la disposition horizontale la bande cultivée (1) est divisée en deux flux cultivés (2) avec une bande d'engrais (4) entre eux, dans lequel l'engrais minéral est appliqué ; de préférence la bande cultivée (1) est divisée en flux (2) cultivés à l'aide de la dent de scarification équipée de deux scarificateurs (10) situés sur des côtés d'un age (11).

3. Procédé selon la revendication 1, **caractérisé en ce que** l'engrais minéral dans le flux d'engrais (4) est également appliqué sur le bord de la bande cultivée (1), créant ainsi un flux cultivé (2) dans la disposition horizontale; de préférence, la bande cultivée (1) est divisée en flux (2) cultivés à l'aide de la dent de scarification équipée d'un scarificateur (10) situé sur un côté de l'age (11).

4. Procédé selon la revendication 1, **caractérisé en ce que** la bande cultivée (1) est divisée en deux flux cultivés (2), dans la disposition horizontale, l'engrais étant appliqué dans une bande d'engrais (4) entre eux, et un flux cultivé situé plus profondément (2), dans la disposition verticale ; de préférence, la bande cultivée (1) est divisée en flux (2) cultivés à l'aide de la dent de scarification équipée de deux niveaux de scarificateurs (10) situés sur les côtés de l'age (13).

5. Procédé selon la revendication 4, **caractérisé en ce que** l'engrais est appliqué de manière centrale dans le flux cultivé plus profond (2).

6. Procédé selon la revendication 1, **caractérisé en ce que** le paillis court est placé en deux flux de biomasse (8) dans chaque bande non cultivée (3) ; de préférence le paillis court est placé à l'aide du disque de herse fonctionnant selon un angle réglé par rapport au sens de la marche.

7. Procédé selon la revendication 1, **caractérisé en ce que** le paillis long est placé en deux flux de biomasse (8) dans chaque bande non cultivée (3) ; de préférence, le paillis long est placé dans un flux de biomasse (8) dans une bande non cultivées sur deux (3).

8. Procédé selon la revendication 1, **caractérisé en ce que** la profondeur d'application de l'engrais est contrôlée en utilisant le contrôle de la hauteur des sorties (12) du canal de l'engrais du dispositif de dosage de l'engrais.

9. Procédé selon la revendication 1, **caractérisé en ce que** chaque bande cultivée (1) est compactée individuellement en utilisant une roue de pressage pneumatique, où le compactage est contrôlé par la pression hydraulique indépendante de chaque roue de la presse, par le contrôle de la pression d'air dans la roue ou par le profil du pneu.

10. Procédé selon la revendication 2, **caractérisé en ce que** les graines de plantes cultivées sont semées dans un flux unique de graines (5) asymétrique par rapport au flux d'engrais (4) aligné centralement dans la bande cultivée (1) ; alternativement ils sont semés en deux flux de graines (5) symétriques par rapport au flux d'engrais (4) aligné centralement.

11. Procédé selon la revendication 1, **caractérisé en ce que** la hauteur des crêtes formées par le coutre semeur (13) est contrôlée en changeant le coutre semeur (13).

12. Procédé selon la revendication 10, **caractérisé en ce que** les graines de plantes cultivées sont semées en utilisant le coutre semeur (13) avec une sortie de graines asymétrique (14) ; alternativement et respectivement ils sont semés à l'aide du coutre semeur (13) avec sortie symétrique des graines (14).

13. Procédé selon la revendication 1, **caractérisé en ce que,** en même temps que le semis des graines de plantes cultivées, des graines de plantes de couverture sont semées, dans lequel les graines de plantes de couverture sont dirigées devant, derrière ou à côté du coutre semeur (13) qui sème les graines de plantes cultivées, dans un ou deux flux de plantes de couverture (6) ; alternativement ils sont introduits dans le coutre semeur (13) qui sème les graines des plantes cultivées.

14. Procédé selon la revendication 1 **caractérisé en ce que** le flux de microgranulés (7) contenant des engrais minéraux ou des agents phytosanitaires est dirigé en amont ou en aval du coutre (13) semant les graines de plantes cultivées, sur un ou deux côtés du flux de graines de plantes cultivées (5) ; alternativement il est introduit dans le coutre semeur (13) et mélangé au flux de graines de plantes cultivées (5).

15. Procédé selon la revendication 1 **caractérisé en ce que** le flux de microgranulés (7) contenant des engrais minéraux ou des agents phytosanitaires est dirigé sur la surface des bandes cultivées (1) derrière la roue de profondeur et de compactage (9) ; alternativement il est dirigé vers des bandes non cultivées (3) de sol.

16. Procédé selon la revendication 1, **caractérisé en ce que** le compactage du sol utilisant la roue de profondeur et de compactage (9) est contrôlé en changeant la roue de profondeur et de compactage (9) par une roue avec un profil différent.

17. Procédé selon la revendication 1, **caractérisé en ce qu'**après avoir semé les graines le sol est nivelé à l'aide d'une herse de raclage et de nivellement située en aval du coutre semeur (13) avec des dents régulées et décalées et une inclinaison des dents contrôlée par rapport à la surface du sol.

18. Procédé selon la revendication 1, **caractérisé en ce que** les agents de protection des plantes, les biostimulateurs ou les solutions d'engrais sont pulvérisés à l'aide d'aubes directrices ou de couvercles des flux de fluide de travail.

19. Procédé selon la revendication 18, **caractérisé en ce que** le fluide de travail des agents de protection des plantes, des biostimulateurs ou des solutions d'engrais est pulvérisé dans la bande cultivée (1), dans la bande non cultivée (3), ou sur toute la surface du sol ; alternativement ils sont pulvérisés en amont ou en aval du coutre semeur (13) qui sème les graines des plantes cultivées.

20. Procédé selon la revendication 19, **caractérisé en ce que** le fluide de travail des agents phytosanitaires, des biostimulateurs ou des solutions fertilisantes est en outre pulvérisé en amont ou en aval de la herse de raclage et de nivellement.
